# FASCICULE DE BREVET EUROPEEN

(11) **EP 3 661 161 B1**
(45) Date de publication et mention de la délivrance du brevet: **27.12.2023**
(21) Numéro de dépôt: 19209950.5
(22) Date de dépôt: 19.11.2019
(51) Int. Cl.: G10L 13/04, H04M 3/42, G10L 15/22

(54) **PROCÉDÉ ET SYSTÈME D'ACCÈS À DISTANCE EN VOCAL À DES SERVICES D'ASSISTANTS PERSONNELS VOCAUX**
VERFAHREN UND SYSTEM ZUM SPRACHFERNZUGRIFF AUF PERSÖNLICHE SPRACHASSISTENZDIENSTE
METHOD AND SYSTEM FOR REMOTE VOICE ACCESS TO VOICE ASSISTANT SERVICES

(30) Priorité: 28.11.2018 FR 1872002
(43) Date de publication de la demande: 03.06.2020
(73) Titulaire: Orange, 92130 Issy-les-Moulineaux (FR)
(72) Inventeur: BOUVET, Bertrand, 92326 Chatillon Cedex (FR)

(56) Documents cités:
- EP-A1- 2 784 774
- US-A1- 2016 224 774
- US-A1- 2017 244 834

## Description

### Domaine technique

L'invention appartient au domaine des télécommunications et concerne en particulier un procédé d'accès à distance à un assistant personnel adapté pour recevoir des commandes vocales prononcées par un utilisateur.

### Art antérieur

Un assistant vocal est une application logicielle adaptée pour recevoir des commandes prononcées oralement en langage naturel et pour restituer en retour des informations par synthèse vocale. Ces assistants sont connus sous la forme de logiciels embarqués sur des terminaux mobiles, tels que des tablettes ou des smartphones. Depuis quelques temps, ces assistants prennent aussi la forme d'objets connectés comprenant un microphone et un haut-parleur, adaptés pour interpréter des commandes prononcées par des utilisateurs concernant par exemple des recherches sur Internet ou des demandes de services, et pour restituer le résultat de la commande par synthèse vocale. De tels objets connectés « intelligents » sont très appréciés du public.

Pour cela, un assistant vocal coopère généralement avec un serveur distant grâce à une connexion Internet. Lorsqu'un mot clef particulier prononcé par un utilisateur est détecté, l'assistant déclenche l'enregistrement d'un flux audio au moyen d'un microphone et transmet le flux enregistré au serveur via la connexion Internet. Le serveur met en oeuvre un algorithme de reconnaissance vocale afin d'identifier l'utilisateur prononçant la commande parmi les utilisateurs habilités à utiliser l'assistant et d'interpréter les commandes reconnues. Le serveur peut alors soit traiter la commande, soit transmettre la commande reconnue à l'assistant pour qu'elle soit exécutée localement. L'assistant restitue ensuite, via un haut-parleur, une réponse synthétisée par un algorithme de synthèse vocale.

Un utilisateur peut ainsi commander la lecture d'une chanson en prononçant une phrase du type « *[mot clef]* joue un morceau des Rolling Stones » ou consulter la météo en demandant simplement « *[mot clef]* est-ce qu'il va pleuvoir demain ? ».

Certains assistants offrent en outre la possibilité d'être connectés à une installation domotique afin de permettre à un utilisateur d'interagir avec son habitation par des commandes vocales du type « *[mot clef],* ferme les volets» ou « *[mot clef],* réduit la température ambiante de 2 degrés ».

Les assistants vocaux peuvent encore établir des communications téléphoniques avec d'autres terminaux ou serveurs au travers d'un réseau de télécommunication. L'assistant vocal se comporte alors comme un terminal téléphonique « mains libres » au moyen duquel il est possible d'établir des communications vers d'autres terminaux en prononçant des commandes du type « *[mot clef], appelle Bob », « [mot clef], raccroche» ou « [mot clef], accepte l'appel». Pour appeler « Bob* », l'assistant, ou le serveur auquel il est associé, identifie alors l'utilisateur à partir du timbre de sa voix, accède à un carnet d'adresses de l'utilisateur identifié, recherche le numéro de « Bob » dans le carnet d'adresses puis passe un appel vers le numéro correspondant.

Ainsi, de tels assistants offrent une interface vocale entre les utilisateurs et des données hébergées sur des serveurs ou dans des bases de données.

On constate toutefois que l'usage de ces appareils reste limité. Bien qu'il existe des applications mobiles dédiées à partir desquelles il est possible d'accéder à distance à certaines fonctions offertes par un assistant, d'autres fonctionnalités sont uniquement accessibles par commande vocale. La présence de l'utilisateur à proximité de l'appareil est alors requise, afin que le signal de parole puisse être capté par le microphone. Pourtant, il est parfois souhaitable de pouvoir commander à distance un tel appareil, en conservant l'accès à la totalité des fonctions offertes.

Il existe donc un besoin pour une solution qui permette d'accéder à distance et de façon sécurisée à un assistant vocal tel que décrit précédemment.

EP2784774 A1 montre un procédé fourni pour utiliser un assistant personnel vocal activé par la voix pour un premier équipement utilisateur via une commande de réveil. US2017/244834 A1 montre une méthode d'interaction avec un utilisateur lors d'un appel à l'aide d'un agent de réponse vocale intelligente virtuelle.

### Résumé de l'invention

La présente invention est définie par l'objet de revendications indépendantes 1, 6, 7, 10, 12 et 13. D'autres modes de réalisation détaillés sont définis dans les revendications dépendantes.

A cet effet, il est proposé un procédé d'accès à distance à un assistant vocal adapté pour établir des communications téléphoniques avec un terminal de communication au travers d'un réseau de télécommunications.

Le procédé est remarquable en ce qu'il comporte les étapes suivantes :
- établissement d'une première communication avec un terminal appelant,
- obtention au travers de la communication établie, d'une donnée d'identification de l'assistant vocal,
- transmission d'un message d'établissement d'une seconde communication à destination de l'assistant vocal identifié, le message comprenant au moins un paramètre adapté pour activer un mode de fonctionnement à distance de l'assistant vocal,
- aboutement de la première et la seconde communication.

Ainsi, un serveur reçoit un appel téléphonique en provenance d'un terminal à partir duquel un utilisateur souhaite accéder aux services offerts par un assistant vocal. Après avoir identifié l'assistant vocal grâce à une donnée d'identification transmise dans la communication, le serveur établit une seconde communication à destination de l'assistant vocal. La signalisation permettant d'établir la seconde communication comprend un paramètre particulier permettant à l'assistant vocal d'activer un mode de fonctionnement à distance. Une fois la seconde communication établie, le serveur aboute la première et la seconde communication, de manière à ce que le flux audio en provenance du terminal soit dirigé dans le canal audio établi vers l'assistant, et que le flux audio en provenance de l'assistant soit dirigé dans le canal audio de la première communication à destination du terminal. Le serveur joue un rôle d'intermédiaire entre le terminal appelant et l'assistant vocal. Une telle disposition permet d'offrir un numéro de téléphone unique à tous les utilisateurs souhaitant accéder à distance à leur assistant vocal, de contrôler les droits d'accès à l'assistant, et d'insérer un paramètre particulier dans la demande d'établissement de communication d'accès à distance envoyée à l'assistant. Il est ainsi possible d'accéder à distance à un assistant vocal à partir d'un terminal classique qui n'est pas adapté pour ajouter un paramètre particulier dans la signalisation d'appel.

De cette façon, un utilisateur peut transmettre des commandes vocales à un assistant lorsqu'il n'est pas à portée du microphone de l'assistant.

Selon une réalisation particulière, le procédé d'accès à distance est tel qu'il comprend en outre une étape d'obtention d'une donnée d'authentification en provenance du terminal appelant, l'étape de transmission d'un message d'établissement de communication à destination de l'assistant vocal étant conditionnée par une étape de validation de l'élément d'authentification obtenu.

Le procédé permet ainsi de sécuriser l'accès à l'assistant. La donnée d'authentification est par exemple un code PIN transmis par l'utilisateur du terminal. Lorsque le code PIN communiqué n'est pas validé par le serveur, la seconde communication à destination de l'assistant vocal n'est pas établie. Selon une réalisation particulière, la donnée d'identification est une empreinte vocale obtenue par analyse du timbre de la voix de l'utilisateur. L'expérience utilisateur est ainsi améliorée.

Selon un mode de réalisation particulier, la donnée d'identification de l'assistant vocal obtenue par l'intermédiaire de la première communication est un identifiant d'appel du terminal appelant. Ainsi, l'utilisateur n'a pas à communiquer un identifiant de l'assistant vocal avec lequel établir une communication. Pour cela, le serveur peut par exemple disposer d'une table dans laquelle un identifiant ou une adresse d'un assistant vocal est associé à un numéro de téléphone, permettant ainsi une identification d'un assistant vocal à contacter lorsqu'un appel est présenté.

Selon un mode particulier de réalisation, le procédé est tel que la donnée adaptée pour activer un mode de fonctionnement particulier est un paramètre choisi parmi les paramètres suivants :
- Un N° d'appelant certifié, fourni par exemple dans un entête SIP (Session Initiation Protocol RFC3261) PAI (P-Asserted-Identity),
- Un N° d'appelant non certifié, contenu par exemple dans un entête « FROM » d'un message SIP,
- Un nom d'appelant fourni par un service CLIP (Calling Line Identification Présentation), typiquement dans le champ SIP DISPAY du PAI et/ou FROM
- Une information de localisation spécifique du terminal appelant, typiquement un champ SIP PANI (Private- Access Network Information)
- Une valeur particulière d'un entête SIP User Agent
- Un identifiant de serveur SIP spécifique,
- Un attribut du protocole SDP (Session Description Protocol, IETF RFC4566) spécifique du protocole SIP permettant de négocier le flux media,
- Une adresse IP source (Internet Protocol) spécifique d'un serveur,
- Un nom de domaine spécifique dans une URI (Uniform Ressource Identifier),
- Un entête SIP spécifique,
- Une extension du protocole ISUP/BICC (ISDN Signaling User Part/Bearer-Independent Call Control) dans le cas où l'interconnexion avec le monde circuit est utilisée, par exemple avec l'élément d'information « generic notification flag ».

Ainsi, la présence d'un tel paramètre dans la signalisation d'appel permet à un assistant vocal de détecter que la demande d'établissement de communication est à l'initiative d'un serveur d'accès à distance et non un appel téléphonique classique, et d'activer un mode de gestion de ressources adapté à l'accès à distance.

Selon une réalisation particulière, le procédé d'accès à distance comprend une étape de configuration d'un codec large bande pour la première et la seconde communication. Un codec audio large bande permet d'établir une communication audio de haute qualité entre le terminal et l'assistant vocal, permettant ainsi une meilleure efficacité de la reconnaissance vocale des commandes transmises par l'utilisateur. Un codec à bande élargie permet également une meilleure identification de l'utilisateur à partir du timbre de sa voix. Une telle disposition contribue à améliorer encore l'expérience utilisateur.

Selon un autre aspect, l'invention concerne un dispositif d'accès à distance à un assistant vocal adapté pour établir des communications téléphoniques avec un terminal de communication au travers d'un réseau de télécommunications, le dispositif étant tel qu'il comporte:
- Un premier module de communication adapté pour établir une première communication avec un terminal appelant,
- Un module d'identification, adapté pour obtenir une donnée d'identification de l'assistant vocal au travers de la communication établie, et obtenir une adresse d'un assistant vocal,
- Un second module de communication, adapté pour transmettre vers l'adresse obtenue un message d'établissement d'une seconde communication, le message comprenant au moins un paramètre adapté pour activer un mode de fonctionnement à distance de l'assistant vocal identifié, et
- Un module aboutement de la première et la seconde communication, adapté pour retransmettre vers l'assistant vocal un flux audio en provenance du terminal, et pour retransmettre vers le terminal un flux audio en provenance de l'assistant vocal.

Dans une réalisation particulière, un tel dispositif comprend en outre un module d'authentification adapté pour obtenir et vérifier une donnée d'authentification transmise via la communication établie avec le terminal appelant.

L'invention concerne aussi un serveur comprenant un dispositif d'accès à distance tel que décrit précédemment.

De façon complémentaire au procédé d'accès à distance, l'invention vise un procédé de traitement d'une demande d'accès à distance sur un assistant vocal adapté pour établir des communications téléphoniques avec un terminal de communication au travers d'un réseau de télécommunications, l'assistant vocal étant associé à un dispositif de reconnaissance vocale pour analyser une commande vocale prononcée par un utilisateur, l'analyse étant activée suite à la détection d'un mot clef par l'assistant vocal, et à un dispositif de synthèse vocale pour vocaliser une réponse à ladite commande vocale, le procédé étant tel qu'il comprend les étapes suivantes :
- réception d'un message d'établissement d'une communication vocale, le message comprenant au moins un paramètre d'accès à distance,
- activation d'un mode de fonctionnement particulier comprenant les sous-étapes suivantes:
   o redirection d'un flux audio entrant de la communication téléphonique vers le dispositif de reconnaissance vocale associé, en remplacement du signal capturé par le microphone,
   o redirection d'un flux audio issu du dispositif de synthèse vocale associé vers un canal audio sortant de la communication,
- Lorsque le mode de fonctionnement particulier est activé, transmission d'un message d'acceptation de la communication.

Ainsi, la réception par un assistant vocal d'une demande d'établissement de communication vocale comprenant un paramètre particulier provoque l'activation d'un mode de fonctionnement particulier permettant un accès à distance. De cette façon, l'assistant vocal se comporte différemment selon que la communication entrante est une communication vocale classique ou une communication d'accès à distance. L'activation du mode de fonctionnement particulier comporte au moins une étape au cours de laquelle le dispositif de reconnaissance vocale, qu'il soit mis en oeuvre par l'assistant lui-même ou par un serveur, reçoit les données audio en provenance du terminal distant à la place du signal audio capturé par le microphone. De cette façon, les commandes vocales prononcées oralement par l'utilisateur distant sont transmises via la communication établie jusqu'à l'assistant vocal et traitées par ce dernier ou par le serveur auquel il est associé, comme s'il s'agissait d'un signal de parole capturé localement par le microphone. De même, le signal audio synthétisé par l'assistant vocal, ou par le serveur auquel il est associé, et destiné à être restitué par un haut-parleur local dans un fonctionnement nominal de l'assistant est transmis au terminal distant via la communication établie. De cette façon, l'utilisateur peut entendre à distance le résultat d'une commande vocale traitée par l'assistant.

Selon un mode de réalisation particulier, le procédé de traitement d'une demande d'accès à distance est tel que l'activation du mode de fonctionnement à distance comprend en outre une sous-étape de configuration visant à activer l'enregistrement du flux audio entrant de la communication par le dispositif de capture sans qu'un mot clef soit détecté. Autrement dit, la détection préalable d'un mot clef pour identifier une commande prononcée par un utilisateur est désactivée, toute parole prononcée par l'utilisateur au travers de la communication d'accès à distance étant alors traitée par l'assistant comme une commande.

De manière classique, un assistant vocal enregistre une commande lorsqu'un mot clef prédéfini est prononcé par l'utilisateur. Par exemple, un assistant vocal interrogera un service météo lorsque la phrase « *[mot clef],* quel temps est prévu pour demain ? », mais ignorera la commande si le mot clef n'est pas détecté au préalable. Une telle disposition vise à éviter qu'un assistant vocal n'interprète comme des commandes les conversations des utilisateurs à portée de microphone. La confidentialité est ainsi améliorée. Dans un contexte d'accès à distance cependant, les paroles prononcées par l'utilisateur sont exclusivement destinées à l'assistant vocal et l'introduction de chaque commande par un mot clef est superflue, la confidentialité étant apportée par la communication vocale. Le procédé propose ainsi de simplifier les interactions entre l'assistant et l'utilisateur par une configuration spécifique de l'assistant permettant à l'utilisateur de s'affranchir du mot clef.

Selon un mode particulier de réalisation, le procédé de traitement d'une demande d'accès à distance est tel que l'activation du mode de fonctionnement à distance comprend en outre une sous-étape de configuration visant à activer une restriction d'accès à au moins un service de l'assistant.

Le procédé propose ainsi de sécuriser l'accès à certains services offerts par l'assistant pour lesquels un accès à distance n'est pas souhaitable. La sécurité est ainsi renforcée.

Selon une réalisation particulière, l'activation d'un mode de fonctionnement à distance comprend la désactivation du microphone et/ou du haut-parleur de l'assistant.

Une telle disposition permet de préserver la confidentialité des échanges lors d'un accès à distance à l'assistant vocal, le résultat des commandes n'étant pas vocalisé dans l'environnement immédiat de l'assistant.

Selon un autre aspect, l'invention vise un dispositif de traitement d'une demande d'accès à distance à un assistant vocal adapté pour établir des communications téléphoniques avec un terminal de communication au travers d'un réseau de télécommunications, l'assistant vocal étant associé à un dispositif de reconnaissance vocale pour analyser une commande vocale prononcée par un utilisateur, l'analyse étant activée suite à la détection d'un mot clef par l'assistant vocal, et à un dispositif de synthèse vocale pour vocaliser une réponse à ladite commande vocale, le dispositif comprenant:
- un module de communication adapté pour recevoir un message d'établissement d'une communication vocale, le message comprenant au moins un paramètre adapté pour activer un mode de fonctionnement à distance de l'assistant vocal,
- un module d'activation d'un mode de fonctionnement à distance comprenant un module de routage audio adapté pour :
   o rediriger un flux audio entrant de la communication téléphonique vers le dispositif de reconnaissance vocale en remplacement du signal capturé par le microphone,
   o rediriger un flux audio issu du dispositif de synthèse vocale vers un canal audio sortant de la communication,

le module de communication étant en outre adapté pour transmettre un message d'acceptation de la communication lorsque le mode de fonctionnement particulier est activé.

L'invention concerne aussi un assistant vocal comprenant un dispositif de traitement d'une demande d'accès à distance tel que décrit précédemment.

Dans un mode particulier de réalisation, les différentes étapes des procédés d'accès à distance et de traitement d'une demande d'accès à distance sont déterminées par des instructions de programmes d'ordinateurs.

En conséquence, l'invention vise également un programme d'ordinateur comportant des instructions pour l'exécution des étapes du procédé de traitement d'une demande d'accès à distance et/ou des instructions pour l'exécution des étapes du procédé d'accès à distance, lorsque ledit programme est exécuté par un processeur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur sur lequel est enregistré un programme d'ordinateur comprenant des instructions pour l'exécution des étapes des procédés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur ou encore une mémoire flash. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

Les serveurs, assistants, dispositifs, programmes et supports d'information présentent au moins des avantages analogues à ceux conférés par les procédés correspondants.

Les différents modes ou caractéristiques de réalisation précités peuvent être ajoutés indépendamment ou en combinaison les uns avec les autres, aux étapes du procédé auquel ils se rapportent.

### Brève description des figures

D'autres caractéristiques et avantages de l'invention apparaîtront plus clairement à la lecture de la description suivante d'un mode de réalisation particulier, donné à titre d'exemple illustratif et non limitatif, et des dessins annexés, parmi lesquels :
- La figure 1 illustre une architecture réseau adaptée pour mettre en oeuvre l'invention selon une réalisation particulière,
- La figure 2 représente les principales étapes du procédé d'accès à distance, selon un mode particulier de réalisation,
- La figure 3 représente les principales étapes du procédé de traitement d'une demande d'accès à distance, selon un mode de réalisation particulier,
- Les figures 4a, 4b et 4c illustrent de manière simplifiée l'architecture d'un dispositif de traitement d'une demande d'accès à distance adapté pour contrôler le routage des flux audio de l'assistant vocal dans un mode de réalisation particulier,
- La figure 5 représente sur un chronogramme des messages échangés pour mettre en oeuvre l'invention selon un mode de réalisation particulier, et
- la figure 6 illustre l'architecture d'un dispositif adapté pour mettre en oeuvre le procédé d'accès à distance selon un mode particulier de réalisation.

### Description détaillée

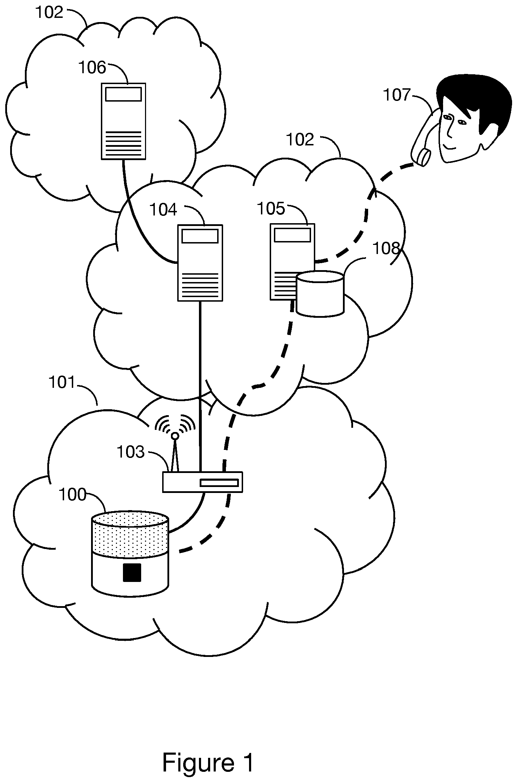

La figure 1 représente un assistant vocal 100 au sein d'un réseau local 101. Le réseau local 101 est interconnecté avec un réseau de télécommunications 102 par l'intermédiaire d'une passerelle 103. Une telle passerelle est par exemple une passerelle résidentielle de type modem-routeur. L'assistant vocal peut ainsi accéder à des services offerts par des serveurs 104 et 105.

De manière classique, un assistant vocal tel que l'assistant 100 comprend un dispositif d'acquisition et de restitution audio associé à un haut-parleur et un microphone, un processeur, et une mémoire dans laquelle est chargé un logiciel comprenant des instructions destinées à être exécutées par le processeur. L'assistant 100 comprend en outre au moins une interface de communication, telle qu'une interface réseau Wifi ou Ethernet ou une interface avec un réseau de données cellulaire, par exemple un réseau 3G ou 4G, lui permettant d'envoyer et recevoir des messages au travers d'un réseau de communication.

Le logiciel est configuré pour analyser le signal audio capturé par un microphone afin d'y détecter un mot clef prononcé par un utilisateur à proximité de l'assistant. Le mot clef permet en outre à l'assistant d'identifier la personne ayant prononcé le mot clef parmi une pluralité de personnes préconfigurées à partir de caractéristiques du timbre de la voix de l'utilisateur, dans le but de contextualiser les requêtes.

Suite à la détection d'un mot clef, l'assistant 100 enregistre les commandes prononcées par l'utilisateur et transmet le signal audio numérisé correspondant au serveur 104. Le serveur 104 dispose d'un logiciel de reconnaissance vocale grâce auquel il interprète la requête. Le serveur 104 effectue également une mise en contexte de la requête, par exemple à partir de l'utilisateur ayant été identifié et/ou le lieu où est installé l'assistant. Une telle mise en contexte de la requête permet par exemple à l'assistant 100 de retourner la météo locale quand un utilisateur prononce simplement une commande du type « *[mot clef]* quel temps fera-t-il demain ? ».

Le serveur 104 peut consulter diverses bases de données pour obtenir une réponse à la requête. Par exemple, le serveur 104 transmet la requête interprétée et contextualisée à un serveur partenaire 106 adapté pour y répondre.

Le serveur 104 retourne ensuite la réponse obtenue à l'assistant. La réponse peut être retournée sous la forme d'un signal audio produit par synthèse vocale, ou bien l'assistant 100 peut lui-même, grâce à son logiciel, synthétiser une réponse vocale.

Enfin, l'assistant restitue la réponse vocalisée grâce à son dispositif de restitution.

L'assistant 100 comprend en outre un module de téléphonie autorisant l'établissement de communications vocales avec d'autres terminaux. Par exemple, l'assistant 100 peut établir une communication vocale avec un terminal téléphonique 107 au travers du réseau de télécommunication 102.

Pour cela, l'assistant peut comprendre un module de téléphonie conforme à la norme DECT (Digital Enhanced Cordless Telecommunications) ou CAT-iq (Cordless Advanced Technology-internet and quality) adapté pour s'enregistrer sur une base compatible comprise dans la passerelle résidentielle 103. Ainsi, du point de vue de la passerelle, l'assistant 100 est vu comme un combiné DECT classique. L'utilisateur peut piloter la fonction téléphonie en prononçant des commandes vocales telles que « *[mot clef],* appelle ma fille », « *[mot clef],* raccorche », etc. Lorsqu'une communication est établie, la voix de l'utilisateur distant est restituée via le haut-parleur de l'assistant 100, et la voix de l'utilisateur local est capturée par le microphone de l'assistant puis transmise au correspondant.

L'assistant vocal 100 étant configuré pour établir des communications téléphoniques avec d'autres terminaux, il est associé à un identifiant d'appel, tel qu'un numéro de téléphone, une SIP URI ou toute autre adresse lui permettant de recevoir des appels téléphoniques. Ce numéro d'appel peut être partagé entre plusieurs terminaux de communication d'une installation domestique.

Selon une réalisation particulière, l'identifiant d'appel n'est pas associé directement à l'assistant vocal 100, mais à la passerelle résidentielle 103. La passerelle 103 comprend une base de téléphonie conforme à la norme DECT (Digital Enhanced Cordless Télécommunications) ou CAT-iq (Cordless Advanced Technology-internet and quality) auprès de laquelle des terminaux DECT peuvent s'enregistrer. Ainsi, du point de vue de la passerelle, l'assistant 100 est vu comme un terminal DECT classique. D'autres terminaux compatibles peuvent de la même façon être associés à la passerelle résidentielle. Dans ce cas, lorsqu'un message d'établissement d'appel est reçu par la passerelle 103, la passerelle 103 transmet de manière classique un signal de présentation d'appel CC-SETUP vers tous les terminaux associés à la base.

Dans un autre mode de réalisation, l'assistant comprend un module de communication SIP adapté pour s'enregistrer directement auprès d'un service de communication offert par le réseau 102, ou auprès d'un serveur SIP compris dans la passerelle 103.

La figure 1 illustre également un serveur 105 adapté pour mettre en oeuvre le procédé d'accès à distance selon l'invention. Le serveur 105 comprend un processeur, une mémoire comprenant des instructions de programme d'ordinateur adaptées pour être exécutées par le processeur, et au moins une interface réseau pilotée par les instructions.

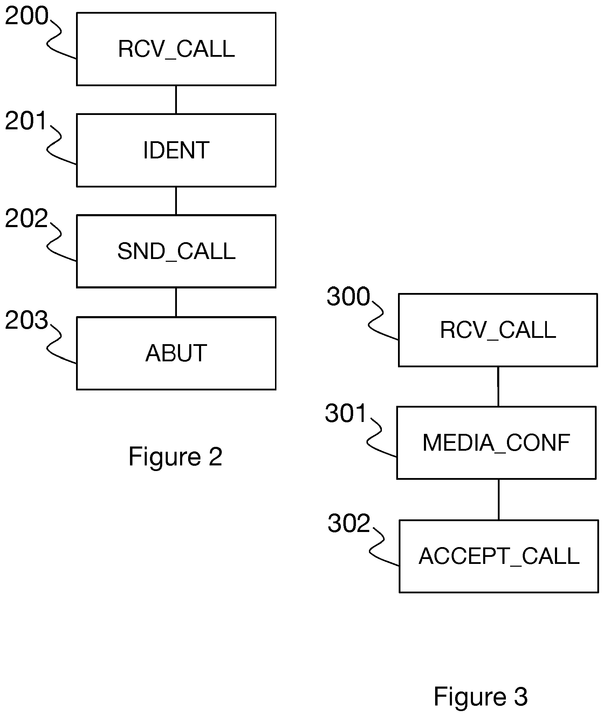

Le procédé d'accès à distance va maintenant être décrit en relation avec les figures 2 à 5.

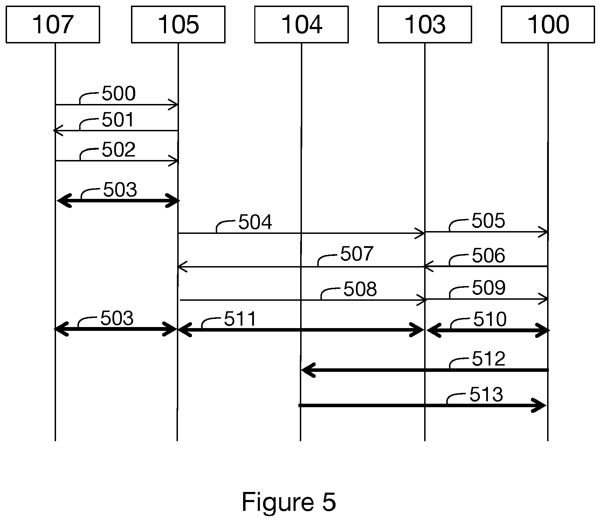

La figure 5 représente sur un chronogramme des messages échangés entre le terminal 107, le serveur d'accès à distance 105, la passerelle 103 et l'assistant vocal 100. Bien entendu, ce schéma n'est pas exhaustif et d'autres messages peuvent être échangés entre les différentes entités. Le réseau de télécommunication peut en outre comprendre d'autres entités intermédiaires qui ne sont pas représentées sur la figure 5.

Lors d'une première étape 200, le serveur 105 reçoit une demande d'établissement de communication en provenance du terminal 107. Il s'agit par exemple d'un message SIP INVITE 500 d'établissement d'une communication audio à l'initiative du terminal 107. Le serveur répond alors de manière classique par un message SIP 200 OK 501, acquitté par un message SIP ACK 502. Suite à ces échanges de messages, un flux audio RTP (Real-Time Transport Protocol) 503 bidirectionnel est établi entre le terminal 107 et le serveur d'accès à distance 105. Bien entendu, d'autres protocoles de communication peuvent être mis en oeuvre pour établir la communication entre le serveur 105 et le terminal 107.

Pour cela, le serveur 105 dispose d'une interface de communication adaptée pour échanger des messages avec des terminaux tels que le terminal 107. Par exemple, le serveur 105 comprend une interface de communication adaptée pour établir des communications conformes au protocole SIP, ISUP ou encore des communications GSM, 3G ou 4G. Le serveur 105 dispose en outre d'un numéro d'appel, tel qu'un identifiant E.164 ou une SIP URI pouvant être composé par le terminal 107 pour établir la communication.

Selon un mode particulier de réalisation, le terminal 107 accède au service via un service de type « clic2call ». Dans ce cas, l'utilisateur du terminal 107 se connecte par exemple à un site web, saisit via une interface prévue à cet effet le numéro de téléphone du terminal 107 avec lequel il souhaite utiliser à distance son assistant vocal. Le service « Clic2call » génère alors un appel vers le numéro du terminal 107 afin d'établir la communication. L'appel étant alors à l'initiative du serveur, l'utilisateur du terminal 107 n'est pas facturé.

Selon une autre réalisation particulière, le terminal 107 accède au service d'accès à distance selon la technologie WebRTC (Web Real-Time Communication, ou communication en temps réel pour le Web, développé par l'IETF et W3C), c'est-à-dire au travers d'une connexion http.

A l'étape 201, suite à l'établissement de la communication avec le terminal 107, le serveur 105 obtient une donnée d'identification de l'assistant vocal 100. Pour cela, le serveur 105 met en oeuvre un service vocal interactif invitant l'utilisateur du terminal 107 à indiquer un identifiant de l'assistant vocal auquel il souhaite accéder à distance. Les identifiants sont par exemple fournis par DTMF ou commandes vocales. Un tel identifiant est par exemple un numéro de téléphone, une adresse de courrier électronique, un numéro de compte client, ou encore un identifiant unique de l'assistant, comme un numéro de série par exemple.

Selon un mode particulier de réalisation, l'identifiant est le numéro d'appel du terminal 107. L'identifiant est ainsi obtenu par le serveur 105 directement à partir du message d'établissement de communication. De cette manière, le serveur 105 peut identifier dès la réception de la communication l'assistant vocal concerné par la demande d'accès à distance. Pour cela, le serveur 105 analyse les messages d'établissement de communication, comme le message 500, pour en extraire le numéro du terminal appelant. Dans le cas d'une communication établie conformément au protocole SIP, l'identifiant du terminal appelant peut être trouvé dans un entête « FROM » du message SIP INVITE 500, ou dans un entête P-Asserted-Network-ID de ce même message.

Dans ce cas de figure, l'identifiant du terminal 107 est préalablement associé à l'assistant vocal 100. Cette association est par exemple réalisée par l'intermédiaire d'un portail web ou d'une application dédiée et mémorisée dans une mémoire accessible par le serveur 105, par exemple dans une base de données 108. De cette façon, l'utilisateur du terminal 107 n'a pas à transmettre un identifiant de l'assistant vocal : l'obtention de la donnée d'identification de l'assistant vocal est automatisée, l'expérience utilisateur est alors améliorée.

Selon réalisation particulière, le serveur 105 obtient en outre une donnée d'authentification, par exemple un code PIN (Personal Identification Number), une empreinte vocale ou un mot de passe. La donnée d'authentification peut être transmise par le terminal 107 par l'intermédiaire de DTMF (Dual Tone Multi-Frequency). Lorsque la donnée d'authentification est une empreinte vocale, le serveur 105 peut confier l'identification de l'utilisateur au serveur 104 qui dispose de fonctions prévues à cet effet. Une telle disposition améliore la sécurité en interdisant l'accès à une personne qui ne connaît pas la donnée d'authentification.

A l'étape 202, le serveur 105 transmet un message d'établissement d'une seconde communication à destination de l'assistant vocal 100, par exemple un message SIP INVITE 504. Ce message comprend au moins un paramètre adapté pour activer un mode de fonctionnement à distance de l'assistant vocal.

Un tel paramètre spécifique peut être un unique élément ou une combinaison d'éléments parmi les suivants:
- un entête SIP FROM. Il s'agit d'un numéro de l'appelant non certifié, dont l'acheminement est garanti par les réseaux de communication,
- un entête P-Asserted-id (PAI). Il s'agit d'un ou plusieurs numéros de l'appelant certifiés, au format SIP URI et au format TEL URI,
- un nom d'appelant (CNIP) présent dans le paramètre SIP DISPLAY de l'entête SIP FROM ou PAI,
- un attribut SDP (Session Description Protocol) spécifique, par exemple l'ajout d'une valeur transmise via l'attribut « a= » d'un message SDP, traditionnellement utilisé pour indiquer la direction d'un média (sendrecv, recvonly, sendonly, inactive), par exemple, « a= reverse »,
- un entête SIP User Agent
- un entête SIP Server,
- un nom de domaine spécifique de la Request-URI et/ou du TO, FROM, PAI, adresse de contact, ou tout autre champ adapté pour signaler une communication d'accès à distance,
- un entête SIP PANI permettant de fournir une information de localisation
- une adresse IP source correspondant au serveur 105.

Le message 504 et le paramètre sont reçus par la passerelle 103. A la réception du message, la passerelle peut transmettre un message de signalisation d'appel entrant 505 :
- soit uniquement à l'assistant 100,
- soit à tous les terminaux de communication associés à la passerelle, parmi lesquels à l'assistant 100.

Le premier cas de figure nécessite que la passerelle puisse identifier l'assistant vocal 100 parmi d'autres terminaux de communication qui lui sont associés, ce qui est par exemple envisageable lorsque les terminaux de communication associés à la passerelle 103 sont des terminaux SIP capables de s'identifier dans un message d'enregistrement et de transmettre des capacités, ou encore lorsqu'ils sont des terminaux conformes au standard DECT associés à une base DECT comprise dans la passerelle 103.

Le second cas de figure est à envisager lorsque la passerelle 103 ne peut pas identifier, parmi les terminaux connectés, un assistant vocal capable de traiter la demande d'accès à distance.

A l'étape 300, l'assistant 100 reçoit le message 505 et recherche dans ce message la présence du paramètre d'accès à distance décrit plus haut. Le message 505 peut avoir été retransmis par la passerelle conformément à un protocole de communication différent du protocole de communication utilisé entre le serveur 105 et la passerelle 103. Par exemple, le message 504 peut être relayé par la passerelle 103 vers l'assistant 100 conformément au standard DECT, sous la forme d'un message DECT 505.

Lorsque l'assistant vocal est adapté pour établir des communications conformes au protocole SIP, le message 505 est un message SIP INVITE. Le message 505 peut être une simple retransmission du message 504, ou bien la passerelle peut générer un nouveau message SIP INVITE comprenant le paramètre d'accès à distance.

Lorsque l'assistant vocal 100 est adapté pour s'enregistrer sur une base DECT interne à la passerelle 103 pour établir des communications, le message 505 est par exemple un message CC-SETUP dans lequel la passerelle insère le paramètre d'accès à distance reçu dans le message 504.

Selon un mode particulier de réalisation, lorsque le message de présentation d'appel reçu par la passerelle 103 comprend au moins un paramètre adapté pour activer un mode de fonctionnement à distance de l'assistant vocal tel que décrit précédemment, la passerelle transmet un signal de présentation d'appel uniquement vers le terminal DECT de l'assistant vocal. De cette façon, les autres terminaux DECT associés à la base DECT ne présentent pas l'appel lorsqu'il s'agit d'un accès à distance. Chaque terminal DECT dispose d'un identifiant spécifique mémorisé par la base radio DECT de la passerelle 103 lors son appairage. Il est donc possible via une interface de configuration de la passerelle 103 de lister le ou les terminaux DECT appariés à la base DECT interne de la passerelle 103, puis de configurer une règle consistant à présenter un appel entrant uniquement au terminal DECT de l'assistant 100 quand le numéro d'appelant est le numéro du serveur d'accès à distance 105. Une telle règle est par exemple mémorisée dans une table d'association stockée dans une mémoire de la passerelle 103. Le même principe s'applique lorsque la base et les terminaux sont par exemple un serveur et des terminaux conformes au standard SIP.

La base DECT de la passerelle 103 peut être configurée pour récupérer toute ou partie des paramètres du message SIP entrant et les insérer quand c'est possible dans le protocole DECT. Par exemple le numéro appelant SIP certifié (PAI) ou non certifié (FROM) spécifique peut être reporté dans le champ « Calling Party Number » du message DECT CC-SETUP. La passerelle 103 peut également valoriser spécifiquement certains champs du protocole DECT, par exemple « Number Type », « Numbering Plan », « Présentation Indicator », « Screening Indicator », « Calling Party Address », etc. afin que l'assistant vocal 100 puisse détecter ce paramètre spécifique et configurer un mode de fonctionnement d'accès à distance.

Le paramètre spécifique compris dans le message 505 permet d'indiquer à l'assistant vocal qu'il doit adopter, à l'étape 301, un mode de fonctionnement particulier comprenant le remplacement du flux audio habituellement capté par le micro pour enregistrer les commandes vocales par le flux vocal téléphonique reçu de l'appelant. De cette façon, le flux analysé pour détecter des commandes vocales n'est plus le flux obtenu par l'intermédiaire du microphone, mais le flux reçu dans la communication téléphonique. En outre, le flux audio obtenu en réponse à une commande vocale et habituellement destiné à être restitué par le haut-parleur de l'assistant est transmis vers l'appelant au travers de la communication téléphonique établie. De cette façon, les réponses habituellement restituées par l'assistant vocal 100 sont transmises au terminal 107 et restituées à son utilisateur.

Une telle modification du routage des flux audio entrant et sortant peut être réalisée de différentes manières.

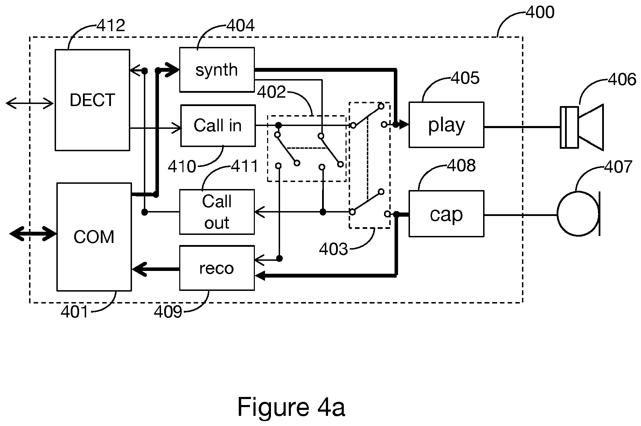

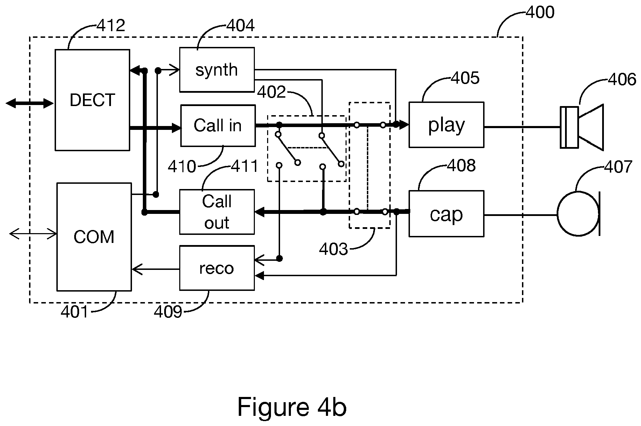

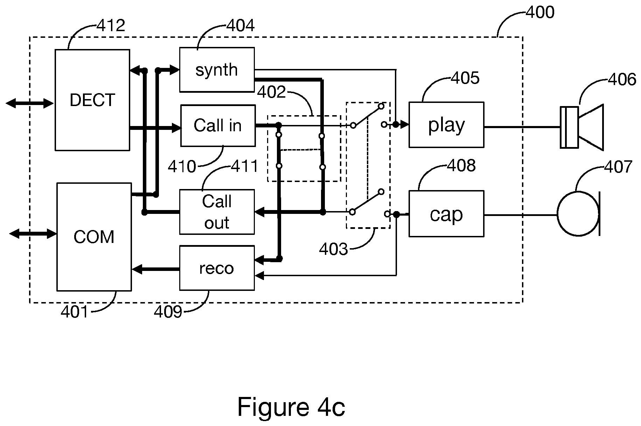

Les figures 4a, 4b et 4c illustrent de manière schématique une architecture d'un dispositif 400 adapté pour contrôler le routage des flux audio de l'assistant vocal 100 selon différents mode de fonctionnements particuliers. Un tel dispositif est par exemple intégré à l'assistant vocal 100.

Le dispositif 400 comprend un module de communication 401. Il s'agit par exemple d'une interface réseau Wi-Fi ou Ethernet permettant à l'assistant d'échanger des données avec d'autres dispositifs, tels que le serveur 104 associé à l'assistant. Par exemple, le module 401 permet d'envoyer des requêtes vers le serveur 104 et de recevoir des réponses à ces requêtes conformément au protocole http.

Le dispositif 400 comprend des modules 402 et 403 configurables pour router des flux audio vers différents modules destinataires. Dans la configuration de la figure 4a, les modules 402 et 403 sont dans un état inactif correspondant à un fonctionnement nominal de l'assistant selon lequel les commandes vocales capturées par le microphone 407 et le module de capture 408 sont routées vers un module de reconnaissance vocale 409 et l'interface réseau 401 pour être transmises au serveur 104, et selon lequel les réponses reçues par l'interface 401 sont traitées par un module 404 de synthèse vocale et un système de restitution 405, 406. Le parcours des flux dans le dispositif 400 est représenté en gras dans les figures 4a, 4b et 4c.

Les modules 402 et 403 sont par exemple mis en oeuvre par un processeur DSP (Digital Signal Processor) ou par une unité de traitement généraliste configuré par des instructions de programme adaptées pour router des flux audio reçus sur une entrée particulière vers une sortie particulière. Les modules 402 et 403 peuvent aussi correspondre à des relais, des transistors ou tout autre composant adaptés pour rediriger un signal reçu sur une entrée vers une sortie particulière et pilotés par une unité de traitement configurée par des instructions de programme d'ordinateur. La configuration des modules 402 et 403 est commandée par un processeur selon le mode de fonctionnement de l'assistant 100 déterminé par la présence ou non du paramètre d'accès à distance dans le message 505 reçu.

La figure 4b représente le dispositif de routage 400 dans une configuration adaptée pour un mode de fonctionnement de type communication audio. Dans ce mode de fonctionnement, l'assistant 100 se comporte comme un terminal téléphonique DECT. Dans cette configuration, le module 403 est configuré pour que les flux capturés par le dispositif d'acquisition 408 et le microphone 407 soient dirigés vers le module de communication DECT 412 au travers d'un dispositif de traitement de communication sortant 411. Le module 411 est par exemple un encodeur adapté pour compresser le flux audio capturé dans un format compatible avec le standard de communication mis en oeuvre par l'assistant 100. La configuration du module 403 représenté sur la figure 4b permet également de diriger le flux audio reçu par le module de communication DECT 412 et décodé par le module de traitement de communication entrant 410 vers le module de restitution 405 et le haut-parleur 406.

La figure 4c illustre le dispositif de routage 400 dans un mode fonctionnement particulier objet de la présente invention. Dans cette configuration, le module 402 est configuré pour que le flux audio issu du module de synthèse vocale 404 soit dirigé vers le module de traitement audio pour les communications sortantes 411, et pour que le flux audio reçu via le module de communication audio entrant 410 soit dirigé vers le module de reconnaissance vocal 409. De cette façon, le flux audio reçu au travers d'une communication établie avec un correspondant est décodé par le module 410 puis transmis au module de reconnaissance vocale 409 avant d'être transmis au serveur 104 via l'interface de communication 401. De même, la réponse du serveur 104 est reçue par le l'interface de communication 401 et vocalisée par le module de synthèse vocale 404, puis le flux audio résultant de ce traitement est transmis au module d'encodage 411 puis au correspondant via le module de communication DECT 412.

Dans une réalisation particulière, le dispositif 400 comprend en outre des moyens supplémentaires pour désactiver le haut-parleur lorsque le mode de fonctionnement particulier de la figure 4c est activé. De cette manière, les commandes vocales prononcées par l'utilisateur du terminal 107 ne sont pas restituées localement par l'assistant vocal 100 lors d'un accès à distance. La confidentialité est ainsi préservée. De même, des moyens supplémentaires permettent, dans un mode particulier de réalisation, de désactiver le microphone 407 du module 400. De cette manière, des paroles prononcées à proximité de l'assistant 100 ne risquent pas d'interférer avec des commandes prononcées par l'utilisateur du terminal 107 lors d'un accès à distance. De tels moyens de désactivation du haut-parleur et/ou du microphone sont par exemple un relai électromagnétique, un transistor, un DSP configuré pour bloquer les entrées ou sorties audio correspondantes ou tout autre moyen permettant de couper le circuit entre le module de synthèse 404 et le haut-parleur 406, et/ou de couper le circuit entre le microphone 407 et le module de reconnaissance vocale 409.

A l'étape 302, lorsque le message 505 comprend le paramètre d'accès à distance, l'assistant adopte un mode de fonctionnement particulier comprenant le décrochage automatique de la communication. Ainsi, la communication est immédiatement acceptée par l'assistant vocal 100. De cette façon, lorsque la passerelle 103 reçoit le message d'acceptation de la communication par l'assistant vocal, elle provoque l'annulation de la présentation d'appel sur les autres terminaux pouvant être connectés. Une telle disposition permet l'établissement d'une communication d'accès à distance avec l'assistant vocal même lorsque la passerelle n'est pas apte à différencier un terminal de type assistant vocal d'un terminal téléphonique classique. En effet, grâce au paramètre spécifique compris dans le message 505, l'assistant vocal 100 détermine que la communication est une communication d'accès à distance qui lui est destinée et accepte automatiquement l'appel.

L'assistant vocal accepte l'appel en retournant un message 506 de réponse, par exemple un message DECT CC-CONNECT ou bien SIP 200 OK, selon la technologie utilisée par l'assistant vocal. De manière classique, l'envoi d'une telle réponse est déclenché par la détection d'une commande vocale appropriée prononcée par l'utilisateur suite à la présentation de l'appel. Dans le cadre de la présente invention toutefois, l'envoi de cette réponse est automatique lorsque le message d'établissement comprend le paramètre d'accès à distance, c'est-à-dire qu'aucune action utilisateur n'est nécessaire sur l'assistant 100 pour accepter l'appel.

Le serveur 105 reçoit le message d'acceptation d'appel 507 transmis par l'assistant vocal 100 à l'étape 203. Il peut s'agir d'une simple retransmission du message 506 lorsque le protocole mis en oeuvre entre l'assistant 100 et la passerelle 103 est le même protocole que celui utilisé entre la passerelle 103 et le serveur 105, mais il peut s'agir d'un type de message différent lorsque l'assistant utilise un protocole distinct de celui mis en oeuvre entre la passerelle 103 et le serveur 105. A la réception du message, le serveur 105 peut acquitter le message 507 en envoyant par exemple un message 508 de type SIP ACK à destination de l'assistant vocal 100 ou de la passerelle 103. Ce message peut être retransmis par la passerelle 103 vers l'assistant 100 sous la forme d'un message 509 de type SIP ACK ou CC-CONNECT-ACK si le terminal est conforme au standard DECT.

A ce stade, une connexion audio bidirectionnelle 510, 511 est établie entre le serveur 105 et l'assistant vocal 100.

Le serveur 105 aboute la communication établie avec le terminal 107 et la communication établie avec l'assistant 100. L'étape 203 d'aboutement peut être mise en oeuvre selon une technique « back to back user agent » (B2BUA). Dans un tel mode, le serveur 105 comprend deux agents utilisateur SIP (SIP User Agent) : un premier est chargé de la communication avec le terminal 107, l'autre avec l'assistant vocal et/ou la passerelle 103. Dans un tel mode, les évènements affectant une communication sont répercutés par le serveur sur l'autre communication. Par exemple, lorsqu'un message « SIP BYE » est reçu par le serveur 105 en provenance du terminal 107, le serveur génère un message SIP BYE à destination de l'assistant vocal. De même, le serveur 105 relaye de manière bidirectionnelle les flux audio 511, 510 vers le terminal 107 au travers de la connexion 504.

Le dispositif représenté sur les figures 4a à 4c comprend des modules 404 et 409 de synthèse et de reconnaissance vocale. Toutefois, dans d'autres modes de réalisation particuliers, les fonctions de synthèse vocale et de reconnaissance vocale peuvent être mise en oeuvre sur un serveur, par exemple sur le serveur 104. Dans un tel cas, le flux audio 510 reçu en provenance du terminal 107 est transmis au serveur 104 sous la forme d'un flux audio 512. Le serveur 104 effectue alors une reconnaissance vocale et exécute les commandes prononcées par l'utilisateur du terminal 107. A l'inverse, la réponse à la requête est vocalisée par le serveur 104 à partir d'un module de synthèse vocale. Le serveur 104 transmet la réponse à la commande de l'utilisateur sous la forme d'un flux audio synthétisé 513.

Selon une réalisation particulière, lorsque l'assistant vocal détecte la présence du paramètre spécifique dans le message d'établissement de communication 505, l'étape de configuration 301 comprend la négociation d'un codec large bande, comme par exemple un codée audio G.722 ou WB-AMR. Pour cela, l'assistant vocal 100 et/ou la passerelle 103 analysent les capacités déclarées par le terminal 107 et/ou le serveur 105 dans le message d'établissement d'appel 504 ou 505 reçu. De telles capacités sont par exemple déclarées dans un message de type SDP (Session Description Protocol) encapsulé dans un message SIP INVITE. Lorsqu'au moins un codée large bande est proposé par le terminal 107 ou les serveur 105 dans le message 504 ou 505, le message d'acceptation d'appel 506 envoyé par l'assistant vocal 100 comprend un ou plusieurs codecs large bande supportés par l'assistant 100 compatible avec l'offre présente dans le message 505. Une telle disposition permet de garantir une bonne qualité de communication entre le terminal 107 et l'assistant. De cette façon, les algorithmes de reconnaissance du timbre permettant d'identifier l'utilisateur, ainsi que les algorithmes de reconnaissance vocale produisent des résultats améliorés. Selon ce mode de réalisation, quand le serveur 105 reçoit à l'étape 200 une demande d'établissement de communication en provenance du terminal 107, le message de réponse 501 comprend au moins une offre de codée large bande. De cette manière, la communication entre le terminal 107 et l'assistant est de haute qualité, permettant une bonne performance des algorithmes de traitement audio.

L'invention permet ainsi de déporter depuis l'assistant 100 vers le terminal 107 les fonctions de capture des commandes vocales et la restitution des réponses. L'utilisateur accède ainsi à distance à l'intégralité des services offerts par l'assistant.

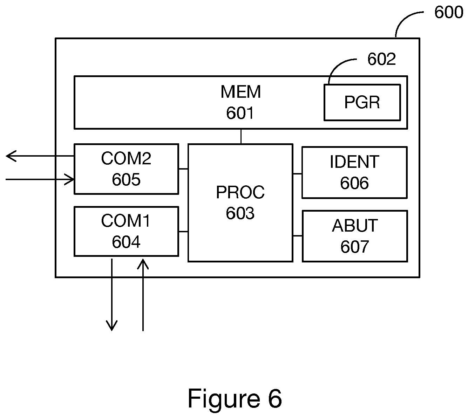

La figure 6 représente l'architecture d'un dispositif 600 adapté pour mettre en oeuvre le procédé d'accès à distance selon un mode de réalisation particulier.

Le dispositif 600 comprend un espace de stockage 601, par exemple une mémoire MEM, une unité de traitement 603 équipée par exemple d'un processeur PROC. L'unité de traitement peut être pilotée par un programme 602, par exemple un programme d'ordinateur PGR, comprenant des instructions configurées pour mettre en oeuvre le procédé d'accès à distance lorsqu'elles sont exécutées par le processeur PROC. Les instructions du programme PGR sont notamment configurées pour mettre en oeuvre les étapes d'établissement d'une première communication avec un terminal appelant, d'obtention au travers de la communication établie, d'une donnée d'identification de l'assistant vocal, de transmission d'un message d'établissement d'une seconde communication à destination de l'assistant vocal, le message comprenant au moins un paramètre adapté pour activer un mode de fonctionnement à distance de l'assistant vocal, et d'aboutement de la première et la seconde communication.

Selon une réalisation particulière, les instructions du programme PGR sont en outre configurées pour mettre en oeuvre une étape d'obtention d'une donnée d'authentification en provenance du terminal appelant, l'étape de transmission d'un message d'établissement de communication à destination de l'assistant vocal étant alors conditionnée par une étape de validation de l'élément d'authentification obtenu.

Dans un mode particulier de réalisation, le programme PGR est en outre configuré pour mettre en oeuvre une étape de configuration d'un codec large bande pour la première et la seconde communication.

À l'initialisation, les instructions du programme d'ordinateur 602 sont par exemple chargées dans une mémoire RAM (Random Access Memory en anglais) avant d'être exécutées par le processeur de l'unité de traitement 603. Le processeur de l'unité de traitement 603 met en oeuvre les étapes du procédé d'accès à distance selon les instructions du programme d'ordinateur 602.

Pour cela, le dispositif comprend, outre la mémoire 601, un premier module de communication 604 (COM1) permettant au dispositif de se connecter à un réseau de télécommunication et d'établir des communications téléphoniques par l'intermédiaire du réseau de télécommunications, et en particulier de recevoir une communication vocale en provenance d'un terminal téléphonique conformément à un standard de communication. Le module 604 est par exemple une interface réseau Ethernet, 2G, 3G ou 4G associée à un User Agent SIP adapté pour recevoir des communications audio en provenance ou vers d'autres terminaux.

Le dispositif 600 comprend également un module d'identification 606, adapté pour obtenir une donnée d'identification d'un assistant vocal au travers de la communication établie par le module 604, et obtenir une adresse d'un assistant vocal. Le module 606 est par exemple mis en oeuvre par des instructions de programme d'ordinateur exécutées par le processeur PROC et configurées pour analyser les messages de signalisation d'appels reçu par le module de communication 604 pour en extraire l'identifiant d'un assistant vocal ou une donnée permettant d'identifier un assistant vocal particulier. Le module 606 comprend par exemple des instructions de programme d'ordinateur permettant d'obtenir un identifiant de terminal appelant à partir d'un message de signalisation d'appel, de consulter une bases de données dans laquelle sont mémorisés des adresses d'assistants vocaux en association avec des numéros d'appels, et d'obtenir l'adresse d'un assistant vocal particulier à partir du numéro d'appelant obtenu.

Le dispositif 600 comprend un second module de communication 605 (COM2) permettant au dispositif de se connecter à un réseau de télécommunication et d'établir des communications téléphoniques par l'intermédiaire de ce réseau, et en particulier d'établir des communications audio bidirectionnelles vers un assistant vocal. Le module 605 est par exemple une interface réseau Ethernet, 2G, 3G, 4G ou toute autre interface réseau adaptée pour mettre en oeuvre un protocole d'établissement de communication audio tel que SIP. Le module 605 peut être piloté par des instructions de programme d'ordinateur adaptées pour être exécutées par le processeur PROC et configurées pour obtenir une adresse d'un assistant vocal à partir d'un message de signalisation reçu dans une première communication établie via le module de communication 604, et établir une seconde communication à destination de l'assistant vocal dont l'adresse a été obtenue, l'établissement de la seconde communication comprenant l'envoi d'un message comprenant au moins un paramètre adapté pour activer un mode de fonctionnement à distance de l'assistant vocal.

Dans une réalisation particulière, les modules de communication 604 et 605 peuvent prendre la forme d'un unique module de communication.

Le dispositif 600 comprend enfin un module d'aboutement 607. Le module d'aboutement 607 est par exemple mis en oeuvre par des instructions de programme d'ordinateur adaptées pour être exécutées par un processeur, par exemple le processeur PROC, et configurées pour retransmettre via l'interface 604 des paquets de données audio reçus sur l'interface 605, et inversement. Ces instructions sont en outre configurées pour relayer les messages de signalisation reçus sur l'interface 604 vers l'interface 605, et inversement.

Selon une réalisation particulière, le dispositif 600 comprend en outre un module d'authentification. Le module d'authentification est par exemple mis en oeuvre par des instructions de programme d'ordinateur adaptées pour être exécutées par un processeur et configurées pour obtenir une donnée d'authentification, par exemple un code PIN, en provenance du terminal appelant via le module 604, l'établissement d'une communication à destination de l'assistant vocal par le module 605 étant conditionnée par une étape de validation de l'élément d'authentification obtenu. Une telle étape de validation comprend par exemple la comparaison d'un code PIN obtenu avec un code mémorisé en association avec l'identifiant de l'assistant vocal pour lequel un accès à distance est demandé.

Selon un mode particulier de réalisation, le dispositif d'accès à distance 600 est compris dans un serveur, par exemple dans un serveur d'application (AS, pour Application Server en anglais) d'un réseau IMS.

## Revendications

1. Procédé d'accès à distance à un assistant vocal, l'assistant étant adapté pour établir des communications téléphoniques avec un terminal de communication au travers d'un réseau de télécommunications et pouvant fonctionner localement ou à distance, le procédé étant mis en oeuvre par un serveur (105) d'accès à distance et est **caractérisé en ce qu'**il comporte les étapes suivantes :
- établissement (200) d'une première communication avec un terminal appelant (107),
- obtention (201) en provenance dudit terminal appelant (107), au travers de la communication établie, d'une donnée d'identification de l'assistant vocal,
- transmission (202) d'un message d'établissement d'une seconde communication à destination de l'assistant vocal identifié, le message comprenant au moins un paramètre adapté pour activer un mode de fonctionnement à distance de l'assistant vocal permettant :
- pour la détection d'une commande vocale, le remplacement du signal capturé par le microphone dudit assisant vocal par un flux vocal téléphonique reçu en provenance dudit terminal appelant (107),
- pour la réponse à ladite commande vocale, l'émission d'un flux audio de réponse à destination dudit terminal appelant (107) en lieu et place du haut-parleur dudit assisant vocal,
- aboutement (203) de la première et la seconde communication.

2. Procédé selon la revendication 1 tel qu'il comprend en outre une étape d'obtention d'une donnée d'authentification en provenance du terminal appelant, l'étape de transmission d'un message d'établissement de communication à destination de l'assistant vocal étant conditionnée par une étape de validation de l'élément d'authentification obtenu.

3. Procédé selon l'une quelconque des revendications 1 ou 2 dans lequel la donnée d'identification de l'assistant vocal est un identifiant d'appel du terminal appelant.

4. Procédé selon l'une quelconque des revendications précédentes dans lequel la donnée adaptée pour activer un mode de fonctionnement particulier est un paramètre sélectionné parmi les paramètres suivants :
- un numéro d'appelant particulier,
- un nom d'appelant particulier,
- une information de géolocalisation particulière,
- un entête particulier d'un message SIP,
- une adresse IP source particulière.

5. Procédé selon l'une quelconque des revendications précédentes comprenant une étape de configuration d'un codée large bande pour la première et la seconde communication.

6. Serveur d'accès à distance (105) à un assistant vocal adapté pour établir des communications téléphoniques avec un terminal de communication au travers d'un réseau de télécommunications et pouvant fonctionner localement ou à distance, ledit serveur étant **caractérisé en ce qu'**il comporte:
- Un premier module de communication (604) adapté pour établir une première communication avec un terminal appelant (107),
- Un module d'identification (606), adapté pour obtenir une donnée d'identification de l'assistant vocal en provenance dudit terminal appelant (107), au travers de la communication établie, et obtenir une adresse d'un assistant vocal,
- Un second module de communication (605), adapté pour transmettre vers l'adresse obtenue un message d'établissement d'une seconde communication, le message comprenant au moins un paramètre pour activer un mode de fonctionnement à distance de l'assistant vocal identifié permettant :
- pour la détection d'une commande vocale, le remplacement du signal capturé par le microphone dudit assisant vocal par un flux vocal téléphonique reçu en provenance dudit terminal appelant (107),
- pour la réponse à ladite commande vocale, l'émission d'un flux audio de réponse à destination dudit terminal appelant (107) en lieu et place du haut-parleur dudit assisant vocal, et
- Un module aboutement (607) de la première et la seconde communication, adapté pour retransmettre vers l'assistant vocal un flux audio en provenance du terminal, et pour retransmettre vers le terminal un flux audio en provenance de l'assistant vocal.

7. Procédé de traitement d'une demande d'accès à distance sur un assistant vocal (100) adapté pour établir des communications téléphoniques avec un terminal de communication (107) au travers d'un réseau de télécommunications, l'assistant vocal étant associé à un dispositif de reconnaissance vocale (104, 100) pour analyser une commande vocale prononcée par un utilisateur dudit terminal de communication (107), l'analyse étant activée suite à la détection d'un mot clef par l'assistant vocal, et à un dispositif de synthèse vocale (100, 104) pour vocaliser une réponse à ladite commande vocale, le procédé étant **caractérisé en ce qu'**il comprend les étapes suivantes :
- réception (300), en provenance d'un serveur d'accès à distance (105), d'un message (505) d'établissement d'une communication vocale, le message comprenant au moins un paramètre d'accès à distance,
- activation (301), en fonction dudit paramètre d'accès à distance reçu, d'un mode de fonctionnement particulier comprenant les sous-étapes suivantes:
o désactivation du microphone et du haut-parleur de l'assistant
o redirection d'un flux audio entrant de la communication téléphonique vers le dispositif de reconnaissance vocale associé, en remplacement du signal capturé par le microphone,
o redirection d'un flux audio issu du dispositif de synthèse vocale associé vers un canal audio sortant de la communication,
- transmission (302), à destination dudit serveur d'accès à distance, d'un message (507) d'acceptation de la communication.

8. Procédé selon la revendication 7 dans lequel l'activation du mode de fonctionnement à distance comprend en outre une sous-étape de configuration visant à activer l'enregistrement du flux audio entrant de la communication par le dispositif de capture sans qu'un mot clef soit détecté.

9. Procédé selon l'une quelconque des revendications 7 à 8 dans lequel l'activation du mode de fonctionnement à distance comprend en outre une sous-étape de configuration visant à activer une restriction d'accès à au moins un service de l'assistant.

10. Dispositif de traitement d'une demande d'accès à distance à un assistant vocal (100) adapté pour établir des communications téléphoniques avec un terminal de communication (107) au travers d'un réseau de télécommunications, l'assistant vocal étant associé à un dispositif de reconnaissance vocale (409, 104) pour analyser une commande vocale prononcée par un utilisateur, l'analyse étant activée suite à la détection d'un mot clef par l'assistant vocal, et à un dispositif de synthèse vocale (404, 104) pour vocaliser une réponse à ladite commande vocale, le dispositif étant **caractérisé en ce qu'**il comprend:
- un module de communication (412) adapté pour recevoir, en provenance d'un serveur d'accès à distance (105), un message d'établissement d'une communication vocale, le message comprenant au moins un paramètre adapté pour activer un mode de fonctionnement à distance de l'assistant vocal,
- un module d'activation (402, 403), en fonction dudit paramètre d'accès à distance reçu, d'un mode de fonctionnement à distance comprenant un module de routage audio adapté pour :
o rediriger un flux audio entrant de la communication téléphonique vers le dispositif de reconnaissance vocale (409) en remplacement du signal capturé par le microphone (407, 408),
o rediriger un flux audio issu du dispositif de synthèse vocale (404) vers un canal audio sortant de la communication,
le module de communication (412) étant en outre adapté pour transmettre, à destination dudit serveur d'accès à distance, un message d'acceptation de la communication lorsque le mode de fonctionnement particulier est activé.

11. Assistant vocal comprenant un dispositif selon la revendication 10.

12. Programme d'ordinateur comprenant des instructions pour mettre en oeuvre un procédé d'accès à distance à un assistant vocal selon l'une quelconque des revendications 1 à 5 et/ou des instructions pour mettre en oeuvre un procédé de traitement d'une demande d'accès à distance, lorsque le programme est exécuté par un processeur.

13. Support d'information sur lequel est enregistré un programme selon la revendication 12.

## Patentansprüche

1. Verfahren für den Fernzugriff auf einen Sprachassistenten, wobei der Assistent geeignet ist, über ein Telekommunikationsnetz Telefonverbindungen mit einem Kommunikationsendgerät aufzubauen, und lokal oder aus der Ferne arbeiten kann, wobei das Verfahren von einem Fernzugriffsserver (105) durchgeführt wird und **dadurch gekennzeichnet ist, dass** es die folgenden Schritte aufweist:
- Aufbau (200) einer ersten Verbindung mit einem anrufenden Endgerät (107),
- Erhalt (201) eines Identifikationsdatenwerts des Sprachassistenten vom anrufenden Endgerät (107) über die aufgebaute Verbindung,
- Übertragung (202) einer Aufbaunachricht einer zweiten Verbindung an den identifizierten Sprachassistenten, wobei die Nachricht mindestens einen Parameter enthält, der geeignet ist, einen Fernbetriebsmodus des Sprachassistenten zu aktivieren, der ermöglicht:
- für die Erfassung einer Sprachsteuerung, den Ersatz des vom Mikrofon des Sprachassistenten aufgefangenen Signals durch einen vom anrufenden Endgerät (107) empfangenen telefonischen Sprachstrom,
- für die Antwort auf die Sprachsteuerung, das Senden eines Antwort-Audiostroms an das anrufende Endgerät (107) an Stelle des Lautsprechers des Sprachassistenten,
- Zusammenfügen (203) der ersten und der zweiten Verbindung.

2. Verfahren nach Anspruch 1, derart, dass es außerdem einen Schritt des Erhalts eines Authentifizierungsdatenwerts vom anrufenden Endgerät enthält, wobei der Übertragungsschritt einer Verbindungsaufbaunachricht an den Sprachassistenten von einem Schritt der Validierung des erhaltenen Authentifizierungselements bedingt wird.

3. Verfahren nach einem der Ansprüche 1 oder 2, wobei der Identifikationsdatenwert des Sprachassistenten eine Anrufkennung des anrufenden Endgeräts ist.

4. Verfahren nach einem der vorhergehenden Ansprüche, wobei der Datenwert, der geeignet ist, einen bestimmten Betriebsmodus zu aktivieren, ein unter den folgenden Parametern ausgewählter Parameter ist:
- eine bestimmte Anrufernummer,
- ein bestimmter Anrufername,
- eine bestimmte Geolokalisationsinformation,
- eine bestimmte Kopfzeile einer SIP-Nachricht,
- eine bestimmte IP-Quelladresse.

5. Verfahren nach einem der vorhergehenden Ansprüche, das einen Schritt der Konfiguration eines Breitband-Codec für die erste und die zweite Verbindung enthält.

6. Server für den Fernzugriff (105) auf einen Sprachassistenten, der geeignet ist, über ein Telekommunikationsnetz Telefonverbindungen mit einem Kommunikationsendgerät aufzubauen, und lokal oder aus der Ferne arbeiten kann, wobei der Server **dadurch gekennzeichnet ist, dass** er aufweist:
- ein erstes Verbindungsmodul (604), das geeignet ist, eine erste Verbindung mit einem anrufenden Endgerät (107) aufzubauen,
- ein Identifikationsmodul (606), das geeignet ist, einen Identifikationsdatenwert des Sprachassistenten über die aufgebaute Verbindung vom anrufenden Endgerät (107) zu erhalten und eine Adresse eines Sprachassistenten zu erhalten,
- ein zweites Verbindungsmodul (605), das geeignet ist, eine Aufbaunachricht einer zweiten Verbindung an die erhaltene Adresse zu übertragen, wobei die Nachricht mindestens einen Parameter enthält, um einen Fernbetriebsmodus des identifizierten Sprachassistenten zu aktivieren, der erlaubt:
- zur Erfassung einer Sprachsteuerung, den Ersatz des vom Mikrofon des Sprachassistenten aufgefangenen Signals durch einen vom anrufenden Endgerät (107) empfangenen telefonischen Sprachstrom,
- zur Antwort auf die Sprachsteuerung, das Senden eines Antwort-Audiostroms an das anrufende Endgerät (107) an Stelle des Lautsprechers des Sprachassistenten, und
- ein Zusammenfügungsmodul (607) der ersten und der zweiten Verbindung, das geeignet ist, einen vom Endgerät kommenden Audiostrom an den Sprachassistenten weiterzuleiten und einen vom Sprachassistenten kommenden Audiostrom an das Endgerät weiterzuleiten.

7. Verfahren zur Verarbeitung einer Fernzugriffsanforderung auf einen Sprachassistenten (100), das geeignet ist, über ein Telekommunikationsnetz Telefonverbindungen mit einem Kommunikationsendgerät (107) aufzubauen, wobei der Sprachassistent einer Spracherkennungsvorrichtung (104, 100), um eine Sprachsteuerung zu analysieren, die von einem Benutzer des Kommunikationsendgeräts (107) ausgesprochen wird, wobei die Analyse nach der Erfassung eines Stichworts durch den Sprachassistenten aktiviert wird, und einer Sprachsynthesevorrichtung (100, 104) zugeordnet ist, um eine Antwort auf die Sprachsteuerung zu vokalisieren, wobei das Verfahren **dadurch gekennzeichnet ist, dass** es die folgenden Schritte enthält:
- Empfang (300), von einem Fernzugriffsserver (105), einer Aufbaunachricht (SOS) einer Sprachverbindung, wobei die Nachricht mindestens einen Fernzugriffparameter enthält,
- Aktivierung (301), abhängig vom empfangenen Fernzugriffparameter, eines bestimmten Betriebsmodus, der die folgenden Teilschritte enthält:
o Deaktivierung des Mikrofons und des Lautsprechers des Assistenten,
o Umleitung eines eingehenden Audiostroms der Telefonverbindung zur zugeordneten Spracherkennungsvorrichtung, als Ersatz des vom Mikrofon aufgefangenen Signals,
o Umleitung eines von der zugeordneten Sprachsynthesevorrichtung stammenden Audiostroms zu einem Ausgangsaudiokanal der Verbindung,
- Übertragung (302), an den Fernzugriffsserver, einer Annahmenachricht (507) der Verbindung.

8. Verfahren nach Anspruch 7, wobei die Aktivierung des Fernbetriebsmodus außerdem einen Teilschritt der Konfiguration enthält, der zum Ziel hat, die Speicherung des eingehenden Audiostroms der Verbindung durch die Auffangvorrichtung zu aktivieren, ohne dass ein Stichwort erfasst wird.

9. Verfahren nach einem der Ansprüche 7 bis 8, wobei die Aktivierung des Fernbetriebsmodus außerdem eine Konfigurations-Teilschritt enthält, der darauf abzielt, eine Zugriffsbeschränkung zu mindestens einem Dienst des Assistenten zu aktivieren.

10. Verarbeitungsvorrichtung einer Anforderung des Fernzugriffs auf einen Sprachassistenten (100), die geeignet ist, über ein Telekommunikationsnetz Telefonverbindungen mit einem Kommunikationsendgerät (107) aufzubauen, wobei der Sprachassistent einer Spracherkennungsvorrichtung (409, 104), um eine von einem Benutzer ausgesprochene Sprachsteuerung zu analysieren, wobei die Analyse nach der Erfassung eines Stichworts durch den Sprachassistenten aktiviert wird, und einer Sprachsynthesevorrichtung (404, 104) zugeordnet ist, um eine Antwort auf die Sprachsteuerung zu vokalisieren, wobei die Vorrichtung **dadurch gekennzeichnet ist, dass** sie enthält:
- ein Verbindungsmodul (412), das geeignet ist, eine Aufbaunachricht einer Sprachverbindung von einem Fernzugriffsserver (105) zu empfangen, wobei die Nachricht mindestens einen Parameter enthält, der geeignet ist, einen Fernbetriebsmodus des Sprachassistenten zu aktivieren,
- ein Aktivierungsmodul (402, 403), abhängig vom empfangenen Fernzugriffsparameter, eines Fernbetriebsmodus, das ein Audio-Routing-Modul enthält, das geeignet ist, um:
o einen eingehenden Audiostrom der Telefonverbindung zur zugeordneten Spracherkennungsvorrichtung (409) umzuleiten, als Ersatz des vom Mikrofon aufgefangenen Signals (407, 408),
o einen von der Sprachsynthesevorrichtung (404) stammenden Audiostrom zu einem Ausgangsaudiokanal der Verbindung umzuleiten,
wobei das Verbindungsmodul (412) außerdem geeignet ist, eine Annahmenachricht der Verbindung an den Fernzugriffsserver zu übertragen, wenn der bestimmte Betriebsmodus aktiviert ist.

11. Sprachassistent, der eine Vorrichtung nach Anspruch 10 enthält.

12. Computerprogramm, das Anweisungen, um ein Fernzugriffsverfahren auf einen Sprachassistenten nach einem der Ansprüche 1 bis 5 durchzuführen, und/oder Anweisungen enthält, um ein Verarbeitungsverfahren einer Fernzugriffsanforderung durchzuführen, wenn das Programm von einem Prozessor ausgeführt wird.

13. Informationsträger, auf dem ein Programm nach Anspruch 12 gespeichert ist.

## Claims

1. Method for remote access to a voice assistant, the assistant being adapted to establish telephonic communications with a communication terminal through a telecommunications network and being able to operate locally or remotely, the method being implemented by a remote access server (105) and being **characterized in that** it comprises the following steps:
- establishing (200) a first communication with a calling terminal (107),
- obtaining (201), from said calling terminal (107), through the established communication, a datum for identifying the voice assistant,
- transmitting (202) a message for establishing a second communication to the identified voice assistant, the message comprising at least one parameter adapted to activate a remote operating mode of the voice assistant making it possible:
- in order to detect a voice command, to replace the signal captured by the microphone of said voice assistant with a telephonic voice stream received from said calling terminal (107),
- in order to respond to said voice command, to transmit a response audio stream to said calling terminal (107) instead of the loudspeaker of said voice assistant,
- joining up (203) the first and the second communication.

2. Method according to Claim 1 such that it further comprises a step of obtaining an authentication datum from the calling terminal, the step of transmitting a message for establishing communication to the voice assistant being conditioned by a step of validating the obtained authentication element.

3. Method according to either one of Claims 1 and 2, in which the datum for identifying the vocal assistant is a call identifier of the calling terminal.

4. Method according to any one of the preceding claims, in which the datum adapted to activate a particular operating mode is a parameter selected from among the following parameters:
- a particular caller number,
- a particular caller name,
- a particular item of geolocation information,
- a particular header of an SIP message,
- a particular IP source address.

5. Method according to any one of the preceding claims, comprising a step of configuring a wideband codec for the first and the second communication.

6. Server (105) for remote access to a voice assistant which is adapted to establish telephonic communications with a communication terminal through a telecommunications network and able to operate locally or remotely, said server being **characterized in that** it comprises:
- a first communication module (604) adapted to establish a first communication with a calling terminal (107),
- an identification module (606), adapted to obtain a datum for identifying the voice assistant from said calling terminal (107), through the established communication, and obtain an address of a voice assistant,
- a second communication module (605), adapted to transmit, to the obtained address, a message for establishing a second communication, the message comprising at least one parameter for activating a remote operating mode of the identified vocal assistant making it possible:
- in order to detect a voice command, to replace the signal captured by the microphone of said voice assistant with a telephonic voice stream received from said calling terminal (107),
- in order to respond to said voice command, to transmit a response audio stream to said calling terminal (107) instead of the loudspeaker of said voice assistant, and
- a module (607) for joining up the first and the second communication, adapted to retransmit, to the voice assistant, an audio stream from the terminal, and to retransmit, to the terminal, an audio stream from the voice assistant.

7. Method for processing a request for remote access to a voice assistant (100) adapted to establish telephonic communications with a communication terminal (107) through a telecommunications network, the voice assistant being associated with a voice recognition device (104, 100) for analysing a voice command pronounced by a user of said communication terminal (107), the analysis being activated after a keyword is detected by the voice assistant, and with a voice synthesis device (100, 104) for vocalizing a response to said voice command, the method being **characterized in that** it comprises the following steps:
- receiving (300), from a remote access server (105), a message (505) for establishing a voice communication, the message comprising at least one remote access parameter,
- activating (301), depending on said received remote access parameter, a particular operating mode comprising the following sub-steps:
o deactivating the microphone and the loudspeaker of the assistant,
o redirecting an input audio stream of the telephonic communication to the associated voice recognition device, in order to replace the signal captured by the microphone,
o redirecting an audio stream originating from the associated voice synthesis device to an output audio channel of the communication,
- transmitting (302), to said remote access server, a message (507) for accepting the communication.

8. Method according to Claim 7, in which activating the remote operating mode further comprises a configuration sub-step aiming to activate the recording of the input audio stream of the communication by the capture device without a keyword being detected.

9. Method according to either one of Claims 7 and 8, in which activating the remote operating mode further comprises a configuration sub-step aiming to activate a restriction on access to at least one service of the assistant.

10. Device for processing a request for remote access to a voice assistant (100) adapted to establish telephonic communications with a communication terminal (107) through a telecommunications network, the voice assistant being associated with a voice recognition device (409, 104) for analysing a voice command pronounced by a user, the analysis being activated after a keyword is detected by the voice assistant, and with a voice synthesis device (404, 104) for vocalizing a response to said voice command, the device being **characterized in that** it comprises:
- a communication module (412) adapted to receive, from a remote access server (105), a message for establishing a voice communication, the message comprising at least one parameter adapted to activate a remote operating mode of the voice assistant,
- a module (402, 403) for activating, depending on said received remote access parameter, a remote operating mode comprising an audio routing module adapted to:
o redirect an input audio stream of the telephonic communication to the voice recognition device (409) in order to replace the signal captured by the microphone (407, 408),
o redirect an audio stream originating from the voice synthesis device (404) to an output audio channel of the communication,
the communication module (412) being further adapted to transmit, to said remote access server, a message for accepting the communication when the particular operating mode is activated.

11. Voice assistant comprising a device according to Claim 10.

12. Computer program comprising instructions for implementing a method for remote access to a voice assistant according to any one of Claims 1 to 5 and/or instructions for implementing a method for processing a request for remote access, when the program is executed by a processor.

13. Information medium on which a program according to Claim 12 is stored.
